# EUROPEAN PATENT APPLICATION

(11) **EP 4 556 288 A1**
(43) Date of publication of application: **21.05.2025**
(21) Application number: 23210669.0
(22) Date of filing: 17.11.2023
(51) Int. Cl.: B60L 3/00, B60L 58/22, H01M 10/42, H01M 10/48

(54) **BATTERY SYSTEM MANAGEMENT IN HIGH VOLTAGE SYSTEMS**

(71) Applicant: VOLVO TRUCK CORPORATION, 405 08 Göteborg (SE)
(72) Inventor: LILLMAA, Henri, 463 72 LÖDÖSE (SE); RAY, Dripta, 412 76 GÖTEBORG (SE); ALAMAZ, Yusuf, 422 51 HISINGS BACKA (SE); JARGANS, Ringolds, 462 31 TROLLHÄTTAN (SE); SOMPOLPONG, Apichai, 412 78 GÖTEBORG (SE)
(74) Representative: Ström & Gulliksson AB

(57) **Abstract**

A computer system (300) comprising processing circuitry (302) configured to:
control a battery management system adapted for a high voltage battery system (1) in an energy storage system, receive measurement data or signals from sensors (5); detect faulty battery cells (4A) in said battery pack (3); calculate a discharge power limit for battery cells (4B, 4C) adjacent to said faulty battery cells (4A), and control discharge from said adjacent battery cells (4B, 4C) to said predetermined discharge power limit, maintain at least one main contactor (6) closed during said discharge of adjacent battery cells (4A, 4C).

## Description

### TECHNICAL FIELD

The disclosure relates generally to battery management method and system. In particular aspects, the disclosure relates to battery management in high voltage systems. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In high voltage battery systems, for instance in electrical or hybrid electrical vehicles, intense thermal events caused by thermal runaway of the battery cells could potentially be detrimental to the battery pack.

Therefore, in case thermal runaway is detected in battery pack the power limits for both charge and discharge are conventionally set to zero and high voltage contactors are commanded to be opened, to reduce the effect of the thermal runaway. This means that the high voltage systems is disconnected. The reason for setting the charge and discharge current limits to zero are often due to design limits and constraint in the typical HV system.

### SUMMARY

According to a first aspect of the disclosure, a computer system is presented. The computer system comprises a processing circuitry configured to control a battery management system adapted for a high voltage battery system in an energy storage system, to receive measurement data or signals from sensors, and detect faulty battery cells in said battery pack. The processing circuitry is further configured to calculate a discharge power limit for battery cells adjacent to said faulty battery cells, and to control discharge from said adjacent battery cells to a predetermined state of charge, based on said calculated discharge limit, and to maintain at least one main contactor closed during said discharge of adjacent battery cells. The sensors may provide the control unit with relevant measureable signals, such as current, voltage and temperature such that the control unit can estimate the state of health parameters using algorithms.
The first aspect of the disclosure may seek to allow for a safe and efficient discharge of battery cells not affected by thermal runaway, in order to be able to discharge the high voltage battery pack of the system. Since the main contactor remains closed a technical benefit may include the vehicle can still be operational during the discharge of the "viable cells", i.e. cell not yet affected by the thermal runaway or at lower risk of being affected.

Optionally in some examples, including in at least one preferred example, the processing circuitry is further configured to electrically isolate said faulty battery cells from said high voltage battery system.

In a second aspect of the present disclosure, a computer implemented method is presented. The method comprises, receiving measurement data or signals from sensors, by processing circuitry of a computer system, detecting faulty battery cells, by the processing circuitry of the computer system based on said measurement data or signals, determining the state of health of battery cells adjacent to said faulty battery cells, by the processing circuitry of the computer system based on measurement data or signals from said sensors, calculating or estimating a discharge power limit for said adjacent cells, by the processing circuitry of the computer system, controlling the discharge of said adjacent battery cells to a predetermined state of charge, by the processing circuitry of the computer system, based on said discharge power limit, and maintaining at least one contactor closed, by the processing circuitry of the computer system, until said predetermined state of charge has been reached.

Optionally in some examples, including in at least one preferred example, the computer implemented method further comprises electrically isolating said faulty battery cells, by the processing circuitry of the computer system.

Optionally in some examples, including in at least one preferred example, the computer-implemented method further comprises electrically isolating said faulty battery cells, by the processing circuitry of the computer system
Optionally in some examples, including in at least one preferred example, the computer-implemented method further comprises calculating or estimating a discharge power limit for each individual battery cell by the processing circuitry of the computer system.

Optionally in some examples, including in at least one preferred example, the computer-implemented method further comprises optionally disconnecting the most adjacent cells from the high voltage system, by the processing circuitry of the computer system, determining the state of health for battery cells, which are located outside of the most adjacent calls, by the processing circuitry of the computer system, and calculating or estimating a power discharge limit for said battery cells located outside of said most adjacent battery cells, by the processing circuitry of the computer system, and controlling the discharge of said battery cells located outside of said most adjacent battery cells, to a predetermined state of charge, by the processing circuitry of the computer system, based on said discharge power limit.

Optionally in some examples, including in at least one preferred example, the computer-implemented method further comprises utilizing the energy discharged from the battery cells in a vehicle, by the processing circuitry of the computer system, and controlling a temperature control system, adapted for controlling the temperature inside a vehicle cabin, by the processing circuitry of the computer system, or controlling a battery cooling system, adapted to regulate the cooling of the battery pack and/or battery cells, by the processing circuitry of the computer system.

Optionally in some examples, including in at least one preferred example, the computer-implemented method further comprises controlling the time period during which said discharge of power may is performed, by the processing circuitry of the computer system.

According to a third aspect there is provided a computer program product comprising program code for performing, when executed by the processing circuitry, the method of the second aspect.

According to a fourth aspect there is provided a non-transitory computer-readable storage medium comprising instructions, which when executed by the processing circuitry cause the processing circuitry to perform the method of the second aspect.

According to a fifth aspect a system adapted for an energy storage system is presented. The system comprises: a battery management control unit; at least one battery pack comprising a plurality of battery cells; a plurality of sensors being configured to measure and monitor state of health parameters of each of the battery cells included in each of the battery packs, thereby providing measurement data or signals for each of the battery cells to said battery management control unit; at least one main contactor arranged between the battery pack and a high voltage consumer of said energy storage system and in connection with said battery management control unit; wherein said battery management control unit is configured to receive measurement data or signals of said state of health parameters from said sensors; wherein if a faulty battery cell is detected, said control unit is further configured to receive measurement data or signals of state of health parameters for battery cells adjacent to said faulty battery cell, and to calculate discharge power limits of said adjacent battery cells, wherein said discharge of said adjacent battery cells is set to a predetermined or safe state of charge; and wherein said control unit is further adapted to maintain said main contactor closed until said adjacent battery cells have been discharged to said predetermined state of charge. By energy storage system, is meant any type of system utilizing high voltage battery packs, such as for instance vehicles, or aerospace applications. An aspect of the disclosure may seek to allow for a safe and efficient discharge of battery cells not affected by thermal runaway, in order to be able to discharge the battery pack. Since the main contactor remains closed a technical benefit may include the vehicle can still be operational during the discharge of the "viable cells", i.e. cell not yet affected by the thermal runaway or at lower risk of being affected. Hence the system provide the ability to continue using the battery pack in case of cell thermal runaway by calculating "safe" power limits of the rest of the cells and mechanism to disconnect the faulty cell from the electric circuit. By providing, or estimating, the power limits to be able to reduce the stored energy of the battery pack in case of thermal runaway, may thus minimize the severity of the thermal runaway in case it propagates throughout the battery pack, since stored energy may be discharged from the adjacent cells to a safe level. Since the main contactor, or contactors may remain closed during discharge the system wherein the energy storage system is arranged, such as for instance a vehicle, may still be operated, or moved to a safer location. Additionally the signals provided to the control unit may include other parameters necessary to estimate the discharge power limit. By identifying and disconnecting the potentially faulty cells from the electrical circuit before they go into thermal runaway, and recalculate the power limits for the non-affected cells, thus allows for utilizing the rest of the battery pack even if one or more cells are determined to be affected by thermal runaway, or faulty.

In one example of the present disclosure, said battery cells may be electrically connected in parallel or in series. The present disclosure is however primarily applicable to battery systems where there are more than one cells in parallel connection within each battery pack.

Optionally in some examples, said control unit may further be adapted to electrically isolate said faulty battery cell. By electrically isolate is meant electrically disconnecting, or electrically circumventing, said faulty battery cell in order to maintain the electrical connection of the battery pack.

Optionally in some examples of the third aspect, said battery management control unit may be adapted to control the opening of said at least one main contactor or contactors, when said adjacent battery cells have been discharged to said predetermined state of charge.

In some examples, said predetermined state of charge is based on measurement data or signals of state of health parameters of adjacent cells.

In one example, said state of health parameters may be any one of temperature, voltage and/or impedance. The state of health parameters may be any parameters relevant to estimate a safe discharge power limit.

In one example, said energy storage system may be a vehicle, and said
battery management control unit may be configured to use said discharged energy in said vehicle. The battery control unit, or processing circuitry, may for instance be configured to provide the discharge power limit as a request to other systems controlling the vehicle, or vehicle thermal control, which in turn may decide to utilize said discharged energy in cooling of said vehicle or in cooling of the battery pack.

According to one optional example, said battery management control unit, or said processing circuitry may be, further configured to provide a warning signal to a driver of said vehicle in response to detecting a faulty battery cell, and said warning comprises any one of an audio or visual warning signal. This could for instance be facilitated through an audio visual warning by the infotainment system or instrument panel cluster system of the vehicle.

According to a sixth aspect there is provided a vehicle comprising the computer system of the first aspect, or the high voltage battery system of the fourth aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary high voltage battery system according to an example.
**FIG. 2** is a flow chart of a battery management method to according to one example.
**FIG. 3** is a schematic diagram of a computer system for implementing examples disclosed herein.
**FIG. 4** is an electrical scheme of a battery pack according to one example.
**FIG. 5** is an electrical scheme of a battery pack according to one example.
**FIG. 6** is a diagram of a method according to one example.

### DETAILED DESCRIPTION

The detailed description set forth below provides information and examples of the disclosed technology with sufficient detail to enable those skilled in the art to practice the disclosure.

The target problem is to be able to safely discharge electrical charge stored in a high voltage battery pack, in order to mitigate the intensity of a thermal event in case of thermal runaway in a battery cell or cells of the battery pack. The higher the state of charge of the battery pack, the more energy is stored and more intense the thermal event due to for example rate of cell heating and gases from the cell(s). One technical benefit of the proposed solution could be applications or scenarios, where opening contactors is not possible or more dangerous than the battery pack that has a faulty cell. Such applications could be automotive, marine, as well as aerospace. Further to this, the proposed solution could be advantageous in scenarios where electrical energy should be available for the powertrain, such as a vehicle driving in a tunnel or in a high congestion area, where it could be better for all in/around the vehicle to get in a less congested area to leave the vehicle. Even if the thermal event with this solution might not be completely avoided, the intensity of it will be less due to decreased energy within the battery pack and also the energy storage system could provide energy for longer time compared to conventional systems, thereby enabling operation in applications or scenarios were sudden loss of power is unacceptable. By allowing for the main contactor to be closed while discharging cells not affected by the thermal runaway, the discharged power may thus for instance also be utilized to cool the battery cell. This system and method may also contribute to ensure continued usage of HV system to allow user to achieve desired safe state instead of abruptly shutting down.

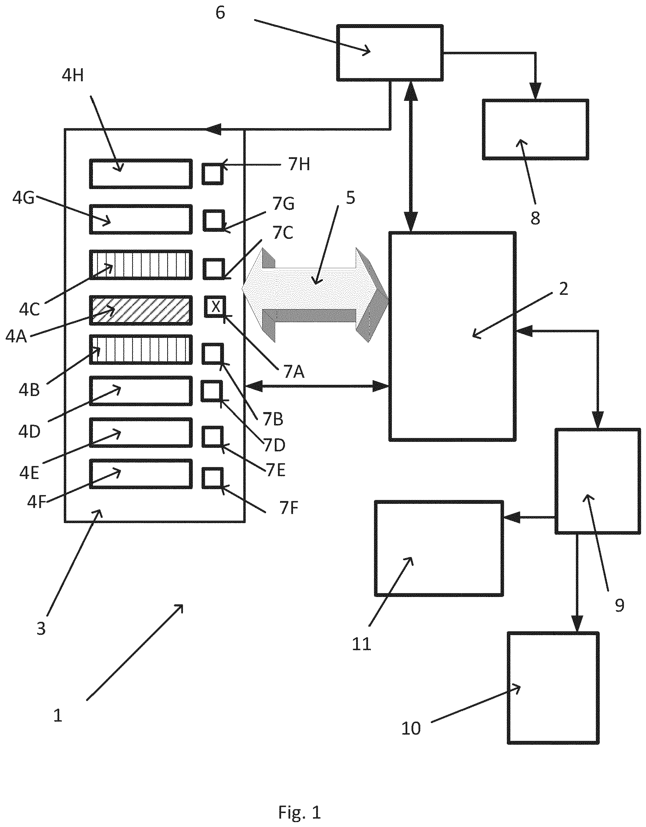

**FIG. 1** illustrates an exemplary high voltage battery system **1.** The high voltage system comprises a battery management control unit **2,** or control unit **2.** The control unit **2** may be coupled to at least one battery pack **3.** The battery pack **3,** or each battery pack, comprises a plurality of battery cells **4A-4H.** As illustrated in one example in **FIG. 1** the battery cells may be connected in parallel. In one example, the battery cells may be connected in series.

The control unit **2** is further coupled to at least one main contactor **6,** and controls the closing and opening of the main contactor **6.** In one example the control unit **2** is connected to at least two contactors **6** (not shown in the drawings). The main contactor 6 is connected to the battery pack **3** and to high voltage consumers **8** of a vehicle. The high voltage consumers may comprise an inverter, the ACC (using high voltage heat pump), DCDC and on-board charger.

At least one sensor **5,** or a plurality of sensors, are connected to the battery pack **3** and to the control unit **2,** and detects or measures several different parameters indicative of the state of health for each individual battery cell **4A-4H** in the battery pack.

The sensor or sensors **5** may thus read or detect state of health parameters relating to any one of voltages, temperatures, impedances or combinations thereof. The sensor **5** or sensors may further be adapted to provide, to the control unit **2,** a location of a specific battery cell **4A-4H** in the battery pack **3.** The sensor or sensors **5** may submit or provide the control unit **2** with relevant measureable signals (current, voltage and temperature) allowing the control unit **2** to estimate the state of health parameters using algorithms.

In one example the battery cells **4A-4H** may be connected to any type of thermal or electrical insulator, such as a fuse **7A-7H.** The fuse may for instance be a thermal fuse or a switchable pyrotechnical fuse. When a thermal runaway is detected in a battery cell **4A,** i.e. an affected or faulty battery cell, the faulty cell may in one example be electrically isolated from the rest of the high voltage battery system. This functionality may be applied for battery cells which are connected in parallel, thus one cell going bad would not interrupt the complete electrical circuit. In case of cylindrical cells, maybe even in case of other form factor cells, there may be wire-bonds, which is a thin wire that connects cell to cell-cell-interconnect that acts as a thermal/electric fuse. By electrically isolated is meant that the faulty battery cell may be disconnected or in other ways electrically circumvented. The electrical isolation may be controlled by the control unit **2.**

In one example (not shown) the control unit 2 may comprise an active balancing system where the control unit **2** can control the power flows from cells directly which would allow for a direct circumvention of the faulty battery cell. This alternative, i.e. electrical circumvention of a damaged or faulty battery cell, may for instance be implemented if the cells are connected in series.

The battery management control unit **2** is adapted to receive signals or measurement data from the sensor or sensors **5.** The measurement data or signals may be used to estimate or analyze the state of health (SOH), or parameters or indicators of the SOH, of the battery packs and/or individual battery cells, and hence is able to detect a battery cell or battery cells which has a higher probability of experiencing a thermal runaway, or other malfunctions. Once a faulty battery cell, shown as battery cell **4A** in **FIG. 1****,** has been detected and located in the battery pack, the control unit **2** may be adapted to control the faulty cell **4A** to be electrically isolated, i.e. disconnected, from rest of the high voltage system. However, in case of a thermal runaway the cell itself conventionally is provided with a current interrupt device (CID) to isolate the cell from the battery pack. The control unit **2** is further adapted to determine the state of health for the battery cells **4B, 4C** that are located adjacent to the faulty battery cell **4A,** through measurement data and input signals from the sensor or sensors **5.** If the adjacent battery cells **4B, 4C** are estimated or detected or determined not to be affected of a thermal runaway or propagation, the control unit **2** calculates or estimates a power limit discharge for these non-affected cells, i.e. the maximum amount of stored energy, or the power level, that can be discharged from these non-affected cells without causing thermal runaway or cause other battery safety violations. This calculation or estimation may be performed taking into account that the faulty battery cell is non-operational or disconnected from the battery pack.

If the adjacent cells **4B, 4C** are determined or estimated to be at a certain probability of thermal runaway the control unit 2 may optionally further be adapted to control these cells to be electrically isolated, i.e. disconnected, from rest of the high voltage system. However, conventionally the battery CID will provide an electrical isolation, at least for parallel connected cells. If the most adjacent cells **4B, 4C** are disconnected from the high voltage system, the control unit 2 is adapted to determine the state of health for the battery cells **4D, 4G** that are located outside of the most adjacent calls **4B, 4C,** and if these cells are non-affected by the thermal runaway or propagation, to calculate a power limit discharge for the non-affected cells **4D, 4G,** i.e. the maximum of stored energy, or power level, that can be discharged from these cells without causing thermal runaway or cause other battery safety violations.

The control unit **2** is adapted to control the discharge from the non-affected cells (**4 B, C, D, G**), or control the operation of discharge, while maintaining the main contactor or contactors **6** closed or in a closed state, until all the non-affected battery cells of the battery pack have been discharged to a predetermined state of charge or contactors requested to be opened. At the predetermined state of charge, the battery pack **3** has a safe level of charge or level of power. The control unit **2** may thus be configured to calculate or estimate, based on the measurement data, a discharge power limit for each individual battery cell.

Optionally, the battery pack **3** can be disconnected, i.e. the main contactor 6 can be controlled to be opened by the control unit **2** once the safe level has been reached. After that the battery pack can be disconnected, from the high voltage system. This means that all of the non-affected battery cells in a battery pack may be discharged to state of charge where it is safe to remove or disconnect the battery pack **3** from the high voltage system **1.**

By discharge power limit is meant both the level of power and the time for discharge is taken into account such that the discharge power does not cause the non-affected battery cell to develop additional faults, run into a faulty state, i.e. thermal runaway. The control unit **2** thus determines or estimates the faulty cell or cells, and disregard those cells from power limit calculation. The stored energy of non-affected or non-faulty cells is then discharged based on these discharge power limits calculated for the not yet faulty cells, to a predetermined or safe state of charge.

This calculation or estimation of discharge power limits may be performed through conventional algorithms. In one example, in order to be able to calculate the cell level power limits, also requires cell level State-of-Charge estimations, cell level internal resistance estimation and cell level temperature measurement/estimation. Typically, a battery cell has design restraints from the manufacturer, such as operating temperature, cell voltage and maximum operating current limits. Additionally, the State-of-power algorithm would give available power prediction such that the design restraints (cell temperature, SoC, voltage, current) will not be violated. For example, from a cell SoC it could be calculated what would be the corresponding "resting"/cell open circuit voltage. The cell voltage design restraints are known and for example in case of discharge power limits the current OCV minus the lower design voltage restraint would give the delta voltage drop that can be tolerated due to load and internal resistance. Delta voltage divided by the internal resistance would then give the power limit. However, due to diffusion resistance, the voltage drops also as a function of time, so depending on the algorithm and cell model used, either different internal resistances for different time horizons could be used to encounter that phenomena and to get power limits that would predict the available power over some time horizon.

The control unit **2** may further be connected to, and control, other devices or apparatuses in a vehicle. In **FIG. 1** the control unit **2** is shown as connected to a vehicle control unit **9.** The vehicle control unit **9** may, in turn, be connected to a temperature control system **10** for controlling the temperature inside the vehicle cabin, or to a battery cooling system **11,** adapted to regulate the cooling of the battery pack **3** and/or battery cells **4A-4H.** The temperature control of the vehicle may be performed by any conventional systems and functions. The cooling or temperature control of the battery packs or the battery cells may also be performed by any conventional system or functions. In the present disclosure it is thus possible to utilize energy discharged from the battery cells in the vehicle, or vehicle systems, to a maximum allowed capability by for example setting the cooling system 10 to maximum cooling effect, setting cooling system pumps to full speed, utilizing the inverter and/or resistor bank to consume the HV energy and cool the battery pack through the battery cooling system 11. This means that the energy discharged from non-affected battery cells in the battery pack can be transferred or utilized in or to other vehicle systems or functions.

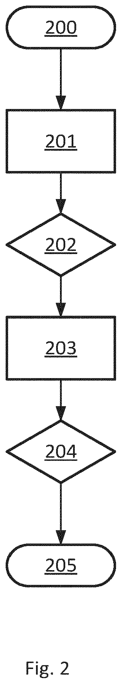

**FIG. 2** is a flow chart of a method, or a computer implemented method, to according to an example, which will be exemplified with the following steps. In step **100** the state of health of the battery cells **4A-4H** is estimated, or determined, by the control unit **2** (or a processing circuitry of a computer system), based on the measured current, voltage and temperature signals from the sensors **5.** In step **101** the control unit **2** determines or detects potentially faulty or affected battery cell (or cells if several) **4A,** as well as battery cells adjacent to said fault cell that may be affected by the thermal runaway. These cells would then also be considered to be faulty or affected battery cells. In step **102** all the faulty or affected battery cells **4A** are electrically isolated, or disconnected, from the high voltage system, in this step the main contactor **6** is maintained in a closed state. In step **103** the control unit **2** determines and detects the non-affected cells in the battery pack **3,** and calculates or estimates a discharge power limit for each non-affected battery cell or cells. In step **104** the control unit **2** controls, or controls the operation of, the non-affected battery cells to discharge stored energy such that the battery pack reaches a predetermined state of charge, where it is safe or at least preferable to disconnect and/or remove the battery pack from the high voltage system. Optionally the discharge of stored energy may be performed within a preferable time or time range. This time could be based on an estimation of when the possibility of thermal propagation increases. In step **105** the control unit **2** may, optionally, control or control the operation of, the main contactor **6** to an open state.

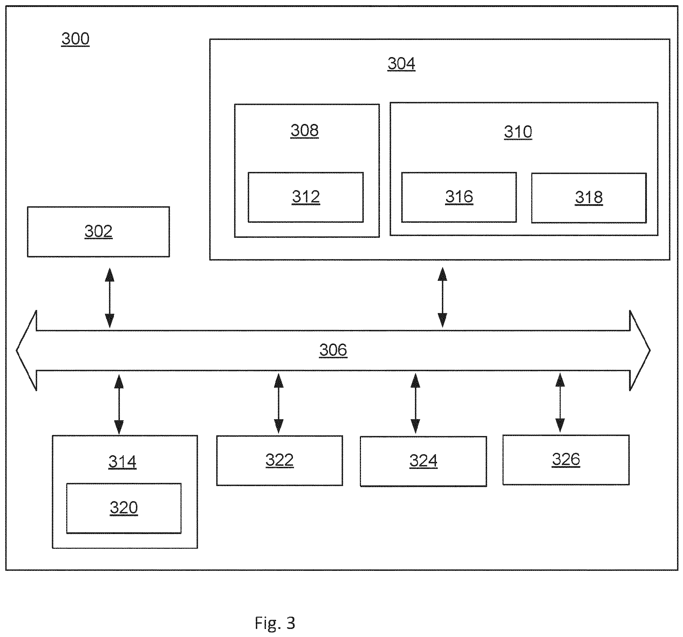

**FIG. 3** is a schematic diagram of a computer system **300** for implementing examples disclosed herein. The computer system **300** is adapted to execute instructions from a computer-readable medium to perform these and/or any of the functions or processing described herein. The computer system **300** may be connected (e.g., networked) to other machines in a LAN, an intranet, an extranet, or the Internet. While only a single device is illustrated, the computer system **300** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **300** may comprise at least one computing device or electronic device capable of including firmware, hardware, and/or executing software instructions to implement the functionality described herein. The computer system **300** may include processing circuitry **302** (e.g., processing circuitry including one or more processor devices or control units), a memory **304,** and a system bus **306.** The computer system **300** may include at least one computing device having the processing circuitry **302.** The system bus **306** provides an interface for system components including, but not limited to, the memory **304** and the processing circuitry **302.** The processing circuitry **302** may include any number of hardware components for conducting data or signal processing or for executing computer code stored in memory **304.** The processing circuitry **302** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **302** may further include computer executable code that controls operation of the programmable device. The processing circuitry **302** of the computer system **300** may further perform the same method as described in **FIG. 2****,** i.e. the processing circuitry **302** is configured to perform the same method as the control unit **2.** In one example the control unit **2** includes or utilizes the processing circuitry **302.**

The system bus **306** may be any of several types of bus structures that may further interconnect to a memory bus (with or without a memory controller), a peripheral bus, and/or a local bus using any of a variety of bus architectures. The memory **304** may be one or more devices for storing data and/or computer code for completing or facilitating methods described herein. The memory **304** may include database components, object code components, script components, or other types of information structure for supporting the various activities herein. Any distributed or local memory device may be utilized with the systems and methods of this description. The memory **304** may be communicably connected to the processing circuitry **302** (e.g., via a circuit or any other wired, wireless, or network connection) and may include computer code for executing one or more processes described herein. The memory **304** may include non-volatile memory **308** (e.g., read-only memory (ROM), erasable programmable read-only memory (EPROM), electrically erasable programmable read-only memory (EEPROM), etc.), and volatile memory **310** (e.g., random-access memory (RAM)), or any other medium which can be used to carry or store desired program code in the form of machine-executable instructions or data structures and which can be accessed by a computer or other machine with processing circuitry **302.** A basic input/output system (BIOS) **312** may be stored in the non-volatile memory **308** and can include the basic routines that help to transfer information between elements within the computer system **300.**

The computer system **300** may further include or be coupled to a non-transitory computer-readable storage medium such as the storage device **314,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **314** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **314** and/or in the volatile memory **310,** which may include an operating system **316** and/or one or more program modules **318.** All or a portion of the examples disclosed herein may be implemented as a computer program **320** stored on a transitory or non-transitory computer-usable or computer-readable storage medium (e.g., single medium or multiple media), such as the storage device **314,** which includes complex programming instructions (e.g., complex computer-readable program code) to cause the processing circuitry **302** to carry out actions described herein. Thus, the computer-readable program code of the computer program **320** can comprise software instructions for implementing the functionality of the examples described herein when executed by the processing circuitry **302.** In some examples, the storage device **314** may be a computer program product (e.g., readable storage medium) storing the computer program **320** thereon, where at least a portion of a computer program **320** may be loadable (e.g., into a processor) for implementing the functionality of the examples described herein when executed by the processing circuitry **302.** The processing circuitry **302** may serve as a controller or control system for the computer system **300** that is to implement the functionality described herein.

The computer system **300** may include an input device interface **322** configured to receive input and selections to be communicated to the computer system **300** when executing instructions, such as from a keyboard, mouse, touch-sensitive surface, etc. Such input devices may be connected to the processing circuitry **302** through the input device interface **322** coupled to the system bus **306** but can be connected through other interfaces, such as a parallel port, an Institute of Electrical and Electronic Engineers (IEEE) 1394 serial port, a Universal Serial Bus (USB) port, an IR interface, and the like. The computer system **300** may include an output device interface **324** configured to forward output, such as to a display, a video display unit (e.g., a liquid crystal display (LCD) or a cathode ray tube (CRT)). The computer system **300** may include a communications interface **326** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

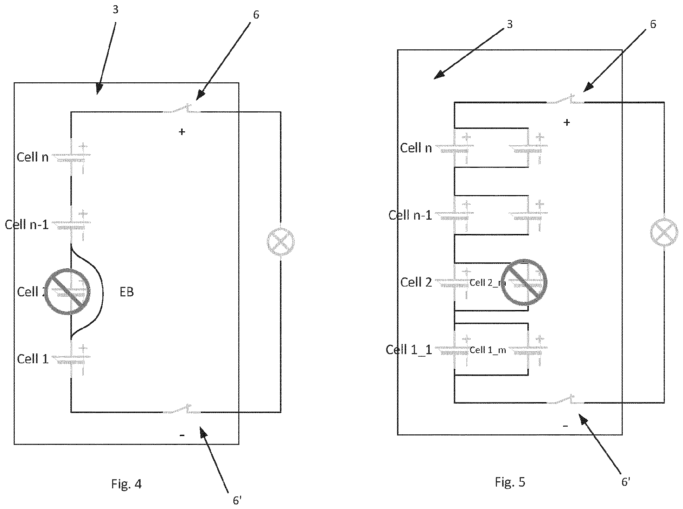

**FIG. 4** illustrates a circuit diagram showing battery cells (i.e. **cell n. n-1, cell 2, cell 1**) connected in series in the battery pack 2. In this example, an electrical bypass (EB) or circumvention of the failed cell (**Cell 2**) may be required to maintain the electrical connection within the battery pack. The faulty cell **2** in **FIG. 4** thus corresponds to the cell shown in **FIG. 1** as battery cell **4A.** The main electrical contactors **6, 6'** are also illustrated in **FIG. 4****.**

**FIG. 5** illustrates a preferred example for the present disclosure and circuit diagram showing battery cells (**cell n, cell n-1, cell 2, cell 1_1**) connected in parallel within the battery pack. In this configuration, the electrical connection remains uninterrupted in case of a single cell (**Cell 2,** i.e. corresponding to battery **cell 4A** of **FIG. 1**) failure. The main electrical contactors **6, 6'** are also illustrated in **FIG. 5****.**

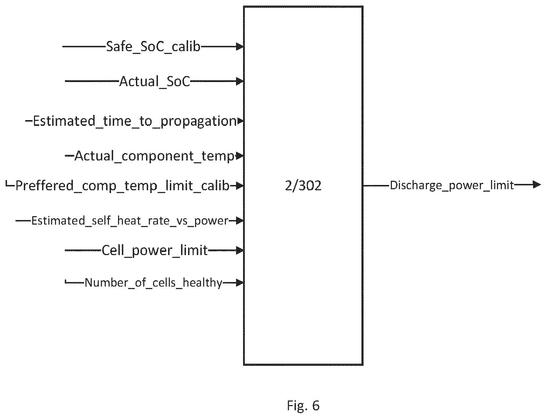

**FIG. 6** illustrates in one example according to the present disclosure possible input parameters or signals to the control unit **2** or processing circuitry **302.** The sensor or sensors **5** (not shown in **FIG. 6**) may submit or provide the control unit **2** or processing circuitry **302** with relevant measureable signals (current, voltage and temperature) allowing the control unit **2** or processing circuitry **302** to estimate the state of health parameters using algorithms, and to estimate or calculate the discharge power limit.

The present disclosure will now be described by way of the following examples.

Example 1: A computer system 300 comprising processing circuitry 302 configured to: control a battery management system adapted for a high voltage battery system 1 in an energy storage system, receive measurement data or signals from sensors 5; detect faulty battery cells 4A in said battery pack 3, calculate a discharge power limit for battery cells 4B, 4C adjacent to said faulty battery cells 4A, and control discharge from said adjacent battery cells 4B, 4C to a predetermined state of charge based on said discharge power limit, maintain at least one main contactor 6 closed during said discharge of said adjacent battery cells 4A, 4C.

Example 2: The computer system 300 of example 1, wherein said processing circuit is further configured to: electrically isolate said faulty battery cells 4A from said high voltage battery system 1.

Example 3: A computer-implemented method for battery management of a high voltage battery system in an energy storage system, said computer implemented method comprising: receiving measurement data or signals from sensors 5, by processing circuitry 302 of a computer system 300, detecting faulty battery cells 4A, by the processing circuitry 302 of the computer system 300 based on said measurement data or signals, determining the state of health of battery cells 4B, 4C adjacent to said faulty battery cells 4A, by the processing circuitry 302 of the computer system 300 based on measurement data or signals from said sensors 5, calculating or estimating a discharge power limit for said adjacent cells 4B, 4C, by the processing circuitry 302 of the computer system 300, controlling the discharge of said adjacent battery cells 4B, 4C to a predetermined state of charge, by the processing circuitry 302 of the computer system 300, based on said discharge power limit, and maintaining at least one contactor 6 closed, by the processing circuitry 302 of the computer system 300, until said predetermined state of charge has been reached.

Example 4: The computer-implemented method of example 3, further comprising: electrically isolating said faulty battery cells 4A, by the processing circuitry 302 of the computer system 300.

Example 5: The computer-implemented method of any one of examples 3 or 4, further comprising: calculating or estimating a discharge power limit for each individual battery cell 4A-4H, by the processing circuitry 302 of the computer system 300.

Example 6: The computer-implemented method of any one of examples 3 to 5, further comprising: optionally disconnecting the most adjacent cells 4B, 4C from the high voltage system, by the processing circuitry 302 of the computer system 300, determining the state of health for battery cells 4D, 4G, which are located outside of the most adjacent calls 4B, 4C, by the processing circuitry 302 of the computer system 300, and calculating or estimating a power discharge limit for said battery cells 4D, 4G located outside of said most adjacent battery cells 4B, 4C, by the processing circuitry 302 of the computer system 300, and controlling the discharge of said battery cells 4D, 4G located outside of said most adjacent battery cells 4B, 4C, to a predetermined state of charge, by the processing circuitry 302 of the computer system 300, based on said discharge power limit.

Example 7: The computer-implemented method of any one of examples 3 to 6, further comprising utilizing the energy discharged from the battery cells in a vehicle, by the processing circuitry 302 of the computer system 300, and controlling a temperature control system 10, adapted for controlling the temperature inside a vehicle cabin, by the processing circuitry 302 of the computer system 300, or controlling a battery cooling system 11, adapted to regulate the cooling of the battery pack 3 and/or battery cells 4A-4H, by the processing circuitry 302 of the computer system 300.

Example 8: The computer-implemented method of any of any one of examples 3 to 7, further comprising controlling the time period during which said discharge of power may is performed, by the processing circuitry 302 of the computer system 300.

Example 9: A computer program product comprising program code for performing, when executed by the processing circuitry 302, the method of examples 3 to 8.

Example 10: A non-transitory computer-readable storage medium comprising instructions, which when executed by the processing circuitry 302, cause the processing circuitry 302 to perform the method of examples 3 to 8.

Exampled 11: A high voltage battery system 1 adapted for an energy storage system, wherein said system 1 comprises: a battery management control unit 2; at least one battery pack 3 comprising a plurality of battery cells 4A- 4H; a plurality of sensors 5 being configured to measure and monitor state of health parameters of each of the battery cells 4A-4H included in each of the battery packs 3, thereby providing measurement data or signals for each of the battery cells to said battery management control unit 2; at least one main contactor 6 arranged between the battery pack and a high voltage consumer 8 of said energy storage system and in connection with said battery management control unit 2; wherein said battery management control unit 2 is configured to receive measurement data or signals of said state of health parameters from said sensors 5; wherein if a faulty battery cell 4A is detected, said control unit 2 is further configured to receive measurement data or signals of state of health parameters for battery cells adjacent 4B, 4C to said faulty battery cell 4A, and to calculate discharge power limits of said adjacent battery cells 4B, 4C, wherein said discharge of said adjacent battery cells 4B, 4C is set to a predetermined state of charge; and wherein said control unit 2 is further adapted to maintain said main contactor 6 closed until said adjacent battery cells 4B, 4C have been discharged to said predetermined or safe state of charge.

Example 12: The high voltage system 1 of example 11, wherein said battery cells are connected in parallel or in series. In a preferred example said battery cells are connected in parallel.

Example 13: The high voltage system 1 of example 11 or 12, wherein said control unit 2 is further is adapted to electrically isolate said faulty battery cell 4A.

Example 14: The high voltage system of any of examples 11 to 13, wherein said battery management control unit 2 is adapted to control the opening of said at least one main contactor 6, when said adjacent battery cells 4B, 4C have been discharged to said predetermined, or safe, state of charge.

Example 15: The high voltage system of any of examples 11 to 14, wherein said predetermined discharge power limit is based on measurement data or signals of state of health parameters of said adjacent cells 4B, 4C.

Example 16: The high voltage system of any of examples 11 to 15, wherein said predetermined discharge power is further based on measurement data or signals of state of health parameters of battery cells 4D, 4G located outside of said adjacent cells 4B, 4C.

Example 17: The high voltage battery system of example 11, wherein said state of health parameters are any one of temperature, voltage and/or impedance.

Example 18: The high voltage battery system of any one of example 11 to 17, further comprising fuses 7A-7G connected to said battery cells, and wherein said control unit 2 is adapted to control or switch said fuses 7A-7G in response to detecting a faulty battery cell 4A.

Example 19: A vehicle comprising the computer system 300 of any of examples 1 to 3, or the high voltage battery system 1 of examples 11 to 18.

Example 20: The vehicle of example 19, wherein said vehicle is any one of an electrical vehicle or a hybrid electrical vehicle.

Example 21: A method for battery management of a high voltage battery system 1 in an energy storage system, wherein said high voltage battery system 1 comprises a battery management control unit 2; at least one battery pack 3 comprising a plurality of battery cells 4A, 4B, 4C; a plurality of sensors 5 being configured to measure and monitor state of health parameters of each of the battery cells 4A, 4B, 4C included in each of the battery packs 3, thereby providing measurement data or signals for each of the battery cells 4A, 4B, 4C to said control unit 2; at least one main contactor 6 arranged between the battery pack 3 and a high voltage consumer 8 of said energy storage system and being connected to said control unit 2, and wherein said control unit 2 is further configured to receive measurement data or signals of said state of health parameters from said sensors 5; said method comprising: measuring or detecting state of health parameters of said battery cells 4A, 4B, 4C by said sensors 5; estimating or calculating a state of health of said battery cells 4A, 4B, 4C by said control unit 2 based on said measurement data or signals, detecting faulty battery cells 4A by said control unit 2; measuring state of health parameters of battery cells adjacent 4B, 4C to said faulty battery cells 4A by said sensors 5; calculating or estimating discharge power limits for said adjacent cells by said control unit 2 based on said signals; controlling the operation of the discharge of stored energy from said adjacent battery cells to a predetermined state of charge, or safe state of charge, based on said discharge power limit, maintaining said at least one main contactor 6 closed until said adjacent battery cells 4B, 4C have been discharged to said predetermined state of charge.

In an optional example of the Example 21, fuses may be connected to said battery cells, and wherein said control unit may be adapted to control or switch said fuses in response to detecting a faulty battery cells. This means that the high voltage (HV) system will remain operational until the HV battery system has been discharged to the predetermined state of charge. The technical benefit may include that since this predetermined state of charge is based on the calculated or estimated discharge power limit, the discharge of non-effected cells will not cause any battery cell safety limit violations. Therefore, the discharge power limits for the yet healthy cells should be provided in such a way that will not cause over-temperature or over-discharge for the non-faulty cells. By the expression, controlling the operation of the discharge of power is meant that the control unit communicates the calculated or estimated discharge power limit to other systems which are then able to execute the discharge. The battery control unit may also can communicate a request indicating that it is highly desired to discharge as soon as possible, i.e. within a preferred time limit, since on some vehicle configurations there could be loads that then are run on purpose to provide more rapid discharge, i.e. use the power on purpose in a way that would normally not be done. For example, a truck might have a break resistor which could be then used to waste energy. The estimation of predetermined or safe state of charge or predetermined discharge power limit means that the calculated discharge power limit does not cause any battery cell safety limit violations, i.e. the cells adjacent to the faulty battery cells can be discharged at a safe rate until a safe level has been reached. Once the battery pack has reached a safe power level the HV contactors may be opened.

Example 22: The method for battery management of a high voltage battery system 1 of example 12, wherein the method further comprises electrically isolating said faulty battery cells 4A by said control unit 2.

Example 23: The method for battery management of a high voltage battery system 1 of example 21 or 22, wherein when said adjacent cells 4B, 4C have been discharged to a predetermined state of charge, said control unit 2 controls opening of said main contactor 6.

Example 24: The method of any one of examples 21 to 23, wherein said calculated discharge power limit is adapted such that said high voltage battery cells can be safely discharged.

Example 25: The method of any of examples 21 to 23, wherein said energy storage system is a vehicle, and wherein said battery management control unit 2 is configured to use said discharged power in said vehicle.

Example 26: The method of example 21 wherein said battery management control unit 2 is further configured to provide a warning signal to a driver of said vehicle in response to detecting a faulty battery cell, and wherein said warning comprises any one of an audio or visual warning signal.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (300) comprising processing circuitry (302) configured to:
control a battery management system adapted for a high voltage battery system (1) in an energy storage system,
receive measurement data or signals from sensors (5),
detect faulty battery cells (4A) in a battery pack (3), based on said measurement data or signals;
calculate a discharge power limit for battery cells (4B, 4C) adjacent to said faulty battery cells (4A),
control discharge from said adjacent battery cells (4B, 4C) to a predetermined state of charge based on said calculated discharge power limit, and to:
maintain at least one main contactor (6) closed during said discharge of energy of adjacent battery cells (4A, 4C).

2. The computer system (300) of claim 1, wherein said processing circuitry is further configured to: electrically isolate said faulty battery cells (4A) from said high voltage battery system (1).

3. A computer-implemented method for battery management of a high voltage battery system in an energy storage system, said computer implemented method comprising:
receiving measurement data or signals from sensors (5), by processing circuitry (302) of a computer system (300),
detecting faulty battery cells (4A), by the processing circuitry (302) of the computer system (300) based on said measurement data or signals,
determining the state of health of battery cells (4B, 4C) adjacent to said faulty battery cells (4A), by the processing circuitry (302) of the computer system (300) based on measurement data or signals from said sensors (5),
calculating or estimating a discharge power limit for said adjacent cells (4B, 4C), based on measurement data or signals from said sensors (5) by the processing circuitry (302) of the computer system (300),
controlling the discharge of said adjacent battery cells (4B, 4C) to a predetermined state of charge, by the processing circuitry (302) of the computer system (300), based on said discharge power limit, and
maintaining at least one contactor (6) closed, by the processing circuitry (302) of the computer system (300), until said predetermined state of charge has been reached.

4. The computer-implemented method of claim 3, further comprising:
electrically isolating said faulty battery cells (4A), by the processing circuitry (302) of the computer system (300).

5. The computer-implemented method of any one of claims 3 to 4, further comprising: calculating or estimating a discharge power limit for each individual battery cell (4A-4H), by the processing circuitry (302) of the computer system (300).

6. The computer-implemented method of any one of claims 3 to 5, further comprising:
determining the state of health for battery cells (4D, 4G), which are located outside of the most adjacent calls (4B, 4C), by the processing circuitry (302) of the computer system (300), and
calculating or estimating a power limit discharge for said battery cells (4D, 4G) located outside of said most adjacent battery cells (4B, 4C), by the processing circuitry (302) of the computer system (300), and
controlling the discharge of said battery cells (4D, 4G) located outside of said most adjacent battery cells (4B, 4C), to a predetermined state of charge, by the processing circuitry (302) of the computer system (300), based on said discharge power limit.

7. The computer-implemented method of any one of claims 3 to 6, further comprising:
utilizing the energy discharged from the battery cells in a vehicle, by the processing circuitry (302) of the computer system (300), and
controlling a temperature control system (10), adapted for controlling the temperature inside a vehicle cabin, by the processing circuitry (302) of the computer system (300), or
controlling a battery cooling system (11), adapted to regulate the cooling of the battery pack (3) and/or battery cells (4A-4H), by the processing circuitry (302) of the computer system (300).

8. The computer-implemented method of any one of claims 3 to 7, further comprising:
controlling the time period during which said discharge is performed, by the processing circuitry (302) of the computer system (300).

9. A computer program product comprising program code for performing, when executed by the processing circuitry (302), the method of claim 3 to 8.

10. A non-transitory computer-readable storage medium comprising instructions, which when executed by the processing circuitry (302), cause the processing circuitry (302) to perform the method of claim 3 to 8.

11. A high voltage battery system (1) adapted for an energy storage system, wherein said system (1) comprises:
a battery management control unit (2);
at least one battery pack (3) comprising a plurality of battery cells (4A, 4B, 4C);
a plurality of sensors (5) being configured to measure and monitor state of health parameters of each of the battery cells (4A, 4B, 4C) included in each of the battery packs (3), thereby providing measurement data or signals for each of the battery cells to said battery management control unit (2);
at least one main contactor (6) arranged between the battery pack and a high voltage consumer (8) of said energy storage system and in connection with said battery management control unit (2);
wherein said battery management control unit (2) is configured to receive measurement data or signals from said sensors (5);
wherein if a faulty battery cell (4A) is detected, said control unit (2) is further configured to receive measurement data or signals of state of health parameters for battery cells adjacent (4B, 4C) to said faulty battery cell (4A), and to calculate discharge power limits of said adjacent battery cells (4B, 4C), and to control the discharge of said adjacent battery cells (4B, 4C) to predetermined state of charge based on said discharge power limit; and wherein said control unit (2) is further adapted to maintain said main contactor (6) closed until said adjacent battery cells (4B, 4C) have been discharged to at least said predetermined state of charge.

12. The high voltage system of claim 11, wherein said battery management control unit (2) is adapted to control the opening of said at least one main contactor (6), when said adjacent battery cells (4B, 4C) have been discharged to said predetermined state of charge.

13. The high voltage system of any of claims 11 to 12, wherein said predetermined discharge power limit is further based on measurement data or signals of state of health parameters of battery cells (4D, 4G) located outside of said adjacent cells (4B, 4C).

14. A vehicle comprising the computer system (300) of any of claims 1 to 2, and/or the high voltage battery system (1) of claims 11 to 13.

15. The vehicle of claim 14, wherein said vehicle is any one of an electrical vehicle or a hybrid electrical vehicle.
